# FASCICULE DE BREVET EUROPEEN

(11) **EP 2 964 410 B1**
(45) Date de publication et mention de la délivrance du brevet: **04.01.2017**
(21) Numéro de dépôt: 14713523.0
(22) Date de dépôt: 04.03.2014
(51) Int. Cl.: B22D 25/02, B22C 9/22, B23P 15/02

(54) **PROCEDE DE FABRICATION D'UNE AUBE DE ROTOR POUR UNE TURBOMACHINE**
VERFAHREN ZUR HERSTELLUNG EINER ROTORSCHAUFEL FÜR EINE TURBOMASCHINE
METHOD FOR PRODUCING A ROTOR VANE FOR A TURBOMACHINE

(30) Priorité: 07.03.2013 FR 1352073
(43) Date de publication de la demande: 13.01.2016
(73) Titulaire: Safran Aircraft Engines, 75015 Paris (FR)
(72) Inventeur: KLEIN, Guillaume, F-77550 Moissy-Cramayel cedex (FR); BASSERY, Josserand, F-77550 Moissy-Cramayel cedex (FR); CONGRATEL, Sébastien, F-77550 Moissy-Cramayel cedex (FR); DUPEYRE, Raphaël, F-77550 Moissy-Cramayel cedex (FR); MATHIEU, David, F-77550 Moissy-Cramayel cedex (FR); TANG, Ba-Phuc, F-77550 Moissy-Cramayel cedex (FR)
(74) Mandataire: Gevers & Orès
(86) Numéro de dépôt international: PCT/FR2014/050471
(87) Numéro de publication internationale: WO 2014/135782

(56) Documents cités:
- EP-A1- 1 734 227
- FR-A1- 2 977 909

## Description

### DOMAINE TECHNIQUE

La présente invention concerne un procédé de fabrication d'une aube de rotor pour une turbomachine, et en particulier d'une aube de rotor d'une turbine basse pression.

### ETAT DE L'ART

L'état de l'art comprend notamment EP-A1-1 734 227 et FR-A1-2 977 909.

Une aube de rotor d'une turbine basse pression comprend une pale dont une extrémité est reliée par une plate-forme à un pied et dont l'extrémité opposée est reliée à un talon portant des léchettes. Les pieds des aubes sont engagés dans des rainures de forme complémentaire, par exemple à section en queue d'aronde, formées à la périphérie d'un disque de la turbine. Le disque porte une rangée annulaire d'aubes dont les plates-formes délimitent intérieurement la veine d'écoulement des gaz dans la turbine, et les talons délimitent extérieurement cette veine.

Les léchettes des talons s'étendent radialement vers l'extérieur, par rapport à l'axe longitudinal du disque, et sont destinées à coopérer par frottement avec un anneau en matériau abradable, qui entoure le disque et qui est porté par un carter de la turbine, pour limiter les fuites de gaz hors veine, c'est-à-dire les fuites entre les talons des aubes et le carter.

Dans la technique actuelle, les léchettes d'une aube sont dites droites, c'est-à-dire qu'elles sont sensiblement parallèles à l'axe longitudinal de l'aube.

Ces léchettes sont réalisées de fonderie au moyen d'un moule qui comprend des empreintes de réalisation des léchettes. Après la solidification des léchettes, le moule est retiré en le déplaçant radialement vers l'extérieur dans une direction sensiblement parallèle à l'axe longitudinal de l'aube.

On a déjà proposé d'utiliser une aube avec des léchettes inclinées par rapport à l'axe longitudinal de l'aube. Ces léchettes inclinées sont plus efficaces car elles procurent une meilleure étanchéité en limitant les fuites de gaz hors veine.

Dans le cas où ces léchettes inclinées seraient réalisées de fonderie, le retrait du moule devrait être effectué en le déplaçant radialement vers l'extérieur dans une direction sensiblement parallèle au plan d'inclinaison des léchettes.

Cependant, en pratique, cette solution n'est pas réalisable. En effet, le talon de l'aube est formé de fonderie avec un voile de matière qui relie les deux léchettes et qui est destiné à être retiré par usinage par la suite. Ce voile de matière est un prolongement de la pale de l'aube au-delà de son talon et est indispensable pour les aubes réalisées dans des matériaux anisotropes du type DS200 (alliages à base nickel), afin d'assurer pendant l'étape de fonderie une orientation correcte des grains en cours de formation dans la pale. La configuration de ce voile de matière impose que le moule de fonderie soit déplacé en translation parallèlement à l'axe longitudinal de l'aube, pour pouvoir le retirer, sinon le démoulage n'est pas possible.

Il n'est donc pas possible dans la technique actuelle de réaliser de fonderie des léchettes d'une aube de rotor, qui soient inclinées et reliées par un voile de matière du type précité.

L'invention a notamment pour but d'apporter une solution simple, efficace et économique à ce problème.

### EXPOSE DE L'INVENTION

L'invention propose un procédé de fabrication d'une aube de rotor pour une turbomachine, cette aube comportant une pale reliée à une extrémité à un pied et à son extrémité opposée à un talon portant des léchettes amont et aval, qui sont au moins en partie inclinées par rapport à l'axe longitudinal de l'aube, le procédé comprenant une étape consistant à réaliser un brut de fonderie destiné à être usiné, caractérisé en ce que la léchette aval est formée de fonderie avec une surépaisseur transversale de sorte que cette léchette présente une face amont sensiblement parallèle à l'axe précité, et en ce que le procédé comprend une étape supplémentaire consistant à usiner ladite surépaisseur pour que la léchette aval ait une face amont inclinée par rapport à l'axe précité.

Les inconvénients précités de la technique antérieure sont supprimés grâce à la face amont « droite » de la léchette aval, qui autorise le retrait du moule par translation le long de l'axe longitudinal de l'aube. La léchette amont de l'aube a déjà une orientation inclinée et la partie amont de la léchette aval doit être usinée pour lui donner également une orientation inclinée.

L'invention permet de conserver un outillage de fonderie peu complexe pour la réalisation de l'aube, et donc d'en réduire le coût. Elle permet également d'obtenir les léchettes en une seule étape de démoulage, ce qui simplifie le procédé de fabrication. Par ailleurs, le surplus de masse ajouté au brut de fonderie du fait de la surépaisseur est relativement faible. La masse de l'aube finie est quasiment inchangée du fait que l'intégralité de cette surépaisseur est destinée à être retirée par usinage.

Avantageusement, les léchettes sont réalisées de fonderie au moyen d'un moule qui, après solidification des léchettes, est retirée de l'aube en le déplaçant en translation vers l'extérieur dans une direction sensiblement parallèle à l'axe longitudinal de l'aube.

L'usinage peut être réalisé au moyen d'une meule ou de toute autre technique appropriée.

Les léchettes peuvent avoir des angles d'inclinaison différents par rapport à l'axe précité.

Ladite face amont s'étend de préférence sur sensiblement toute la dimension axiale (le long de l'axe longitudinal de l'aube) de la léchette aval.

Le brut de fonderie est de préférence réalisé en un matériau anisotrope, notamment à base nickel.

La présente invention concerne également un moule pour la réalisation de fonderie des léchettes amont et aval du talon d'une aube de rotor de turbomachine, comprenant une première empreinte de formation de la léchette amont et une seconde empreinte de formation de la léchette aval, les empreintes débouchant sur une face sensiblement plane du moule destinée à définir une face extérieure du talon de l'aube, caractérisé en ce que la première empreinte comporte une face aval inclinée par rapport à une normale à ladite face plane, et la seconde empreinte comporte une face amont sensiblement parallèle à cette normale.

L'invention concerne encore un brut de fonderie destiné à être usiné pour la réalisation d'une aube de rotor de turbomachine, comprenant une pale reliée à une extrémité à un pied et à son extrémité opposée à un talon portant des léchettes amont et aval, la léchette amont étant au moins en partie inclinée par rapport à l'axe longitudinal de l'aube, caractérisé en ce que la léchette aval comprend une face amont sensiblement parallèle à l'axe précité et une face aval inclinée par rapport à cet axe.

Dans un exemple particulier de réalisation, la léchette amont est inclinée d'un angle d'environ 30° par rapport à l'axe précité, et la face aval de la léchette aval est inclinée d'un angle d'environ 15° par rapport à cet axe.

Les léchettes du brut de fonderie peuvent être reliées entre elles par un voile de matière.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en perspective d'une aube de rotor d'une turbine basse pression de turbomachine ;
- la figure 2 est une vue schématique en perspective et à plus grande échelle du talon de l'aube de la figure 1, ce talon portant des léchettes droites ;
- la figure 3 est une vue schématique en perspective du talon d'une aube de rotor ainsi que d'un moule de réalisation de fonderie des léchettes inclinées de ce talon ;
- la figure 4 est une vue schématique en perspective d'un autre talon d'aube portant des léchettes inclinées ;
- la figure 5 est une vue schématique en perspective du talon d'un brut de fonderie ;
- la figure 6 est une autre vue schématique en perspective du talon de la figure 5 ;
- la figure 7 est une autre vue schématique en perspective du talon de la figure 5, après usinage de la léchette aval du talon de la figure 5 ; et
- la figure 8 est une vue schématique en perspective d'un moule pour la réalisation de fonderie des léchettes.

### DESCRIPTION DETAILLEE

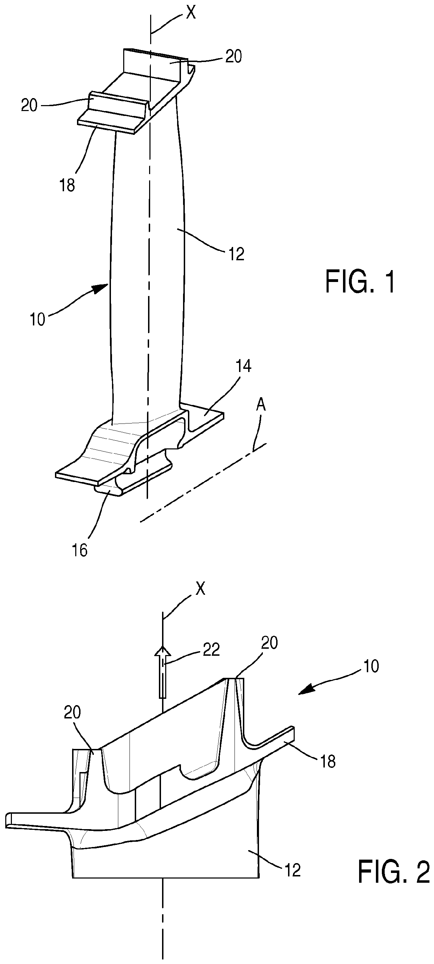

On se réfère d'abord à la figure 1 qui représente une aube de rotor 10 d'une turbine basse pression de turbomachine, cette aube comportant une pale 12 reliée à une extrémité par une plate-forme 14 à un pied 16, à section ici en queue d'aronde, et à son extrémité opposée à un talon 18 portant des léchettes 20 s'étendant radialement vers l'extérieur (par rapport à l'axe longitudinal A de la turbine).

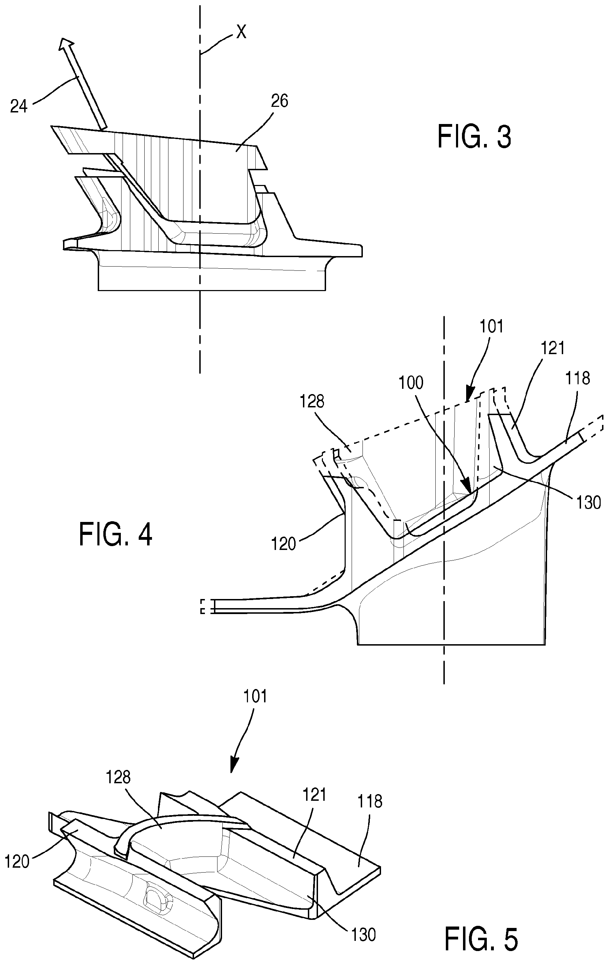

La figure 2 montre un talon 18 dont les léchettes sont droites, c'est-à-dire qu'elles s'étendent parallèlement à l'axe longitudinal X de l'aube, et la figure 3 montre un talon avec des léchettes inclinées par rapport à cet axe X.

L'aube 10 est réalisée de fonderie, par exemple par un procédé à cire perdue. Le procédé de fonderie permet d'obtenir un brut de fonderie qui est destiné à être usiné pour la mise aux côtes des différentes parties de l'aube. Ce procédé est mis en oeuvre au moyen notamment d'un moule comportant des empreintes de réalisation des léchettes.

Dans le cas où les léchettes sont droites (figure 2), le retrait du moule est effectué en le déplaçant en translation vers l'extérieur parallèlement à l'axe X (flèche 22). Dans le cas où les léchettes sont inclinées (figure 3), le retrait du moule 26 devrait être effectué en le déplaçant en translation vers l'extérieur dans une direction parallèle au plan d'inclinaison des léchettes (flèche 24).

Cependant, cette dernière opération n'est pas réalisable en pratique, en particulier car, dans le brut de fonderie, les léchettes sont reliées entre elles par un voile de matière qui impose un retrait du moule précité dans une direction parallèle à l'axe X.

L'invention permet de remédier à ce problème grâce à la réalisation de la léchette aval du talon avec une surépaisseur transversale (ou surépaisseur axiale le long de l'axe A précité) destinée à faciliter le retrait du moule dans la direction privilégié (le long de l'axe X) et à être par la suite usinée.

La figure 4 montre le talon 118 d'une aube de rotor 100 (en traits continus) obtenue par le procédé selon l'invention, ainsi que la partie correspondante du brut de fonderie 101 (en traits pointillés).

Le brut de fonderie 101 est destiné à être usiné, par exemple par meulage. Dans l'exemple représenté, les parties usinées du brut de fonderie sont : les extrémités amont et aval du talon 118, les extrémités radialement externe des léchettes 120, 121, le voile de matière 128 précité, et la surépaisseur 130 précitée prévue sur la léchette aval. Dans un exemple particulier de réalisation de l'invention, la léchette aval 121 a une épaisseur de l'ordre de 1 mm à son extrémité radialement externe et de l'ordre de 3,7mm à son extrémité radialement interne, la surépaisseur étant de l'ordre de 1-2mm.

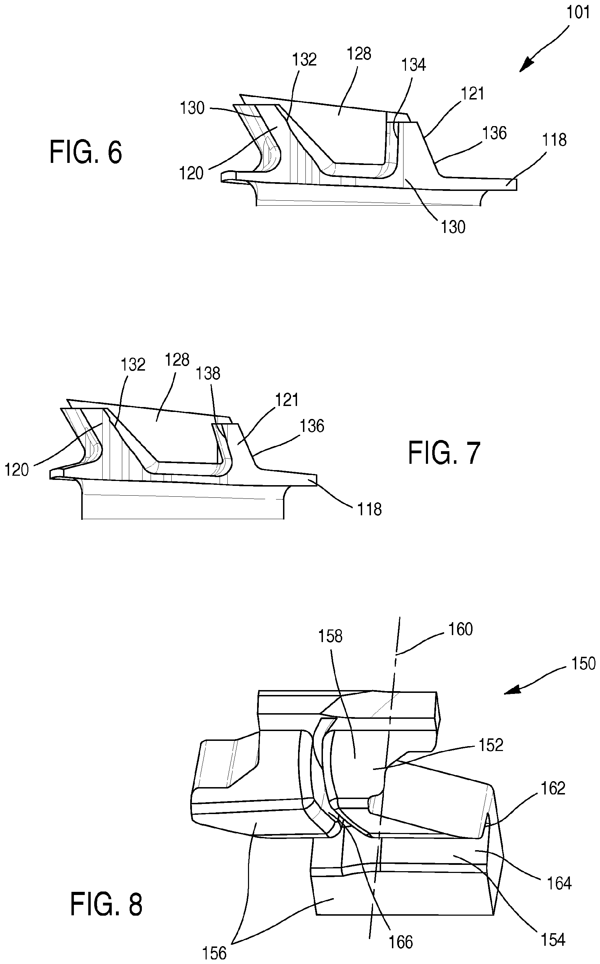

Les figures 5 et 6 montrent le talon 118 d'un brut de fonderie 101 selon l'invention, et la figure 7 montre ce talon 118 après usinage de la léchette aval 121.

La léchette amont 120 est orientée d'aval en amont vers l'extérieur et vers l'amont. Elle comprend une face amont 130 et une face aval 132 inclinées, par exemple d'environ 30° par rapport à l'axe longitudinal X de l'aube.

La léchette aval 121 du brut de fonderie 101 comprend une face amont 134 (située en regard de la léchette amont 120) sensiblement parallèle à l'axe X et une face aval 136 inclinée par rapport à cet axe X et orientée d'aval en amont vers l'extérieur et vers l'amont. La face amont s'étend sur sensiblement toute la dimension radiale (par rapport à l'axe A - ou dimension axiale par rapport à l'axe X) de la léchette 121 et est reliée à son extrémité radialement externe au bord radial externe de la léchette et à son extrémité radialement interne à la face radialement externe du talon 118.

L'usinage de la léchette aval 121 et en particulier de sa partie d'extrémité amont permet de lui former une face amont 138 inclinée par rapport à l'axe X, par exemple de l'ordre de 15° environ. La figure 4 montre la quantité de matière enlevée par usinage. On constate que la majorité de cette quantité est retirée au niveau de la base ou extrémité radialement interne de la léchette aval 121.

La figure 8 montre un moule 150 pour la réalisation des léchettes 120, 121 du talon 118, ce moule comportant des empreintes 152, 154 de formation des léchettes qui débouchent sur une face plane 156 destinée à définir la face extérieure du talon 118. L'empreinte 152 de formation de la léchette amont 120 comprend une face 158 inclinée par rapport à une normale 160 à la face plane et destinée à définir la face aval 132 de la léchette amont 120. L'empreinte 154 de formation de la léchette aval 121 comprend, du côté de l'empreinte 152, une face 162 parallèle à la normale 160 et, du côté opposé, une face 164 inclinée par rapport à cette normale. Le moule 150 comprend en outre une gorge 166 débouchant sur la face plane 156 et reliant les deux empreintes 152, 154, cette gorge étant destinée à recevoir de la matière pour la formation du voile de matière précité.

## Revendications

1. Procédé de fabrication d'une aube de rotor (10) pour une turbomachine, cette aube comportant une pale (12) reliée à une extrémité à un pied (16) et à son extrémité opposée à un talon (18) portant des léchettes amont et aval, qui sont au moins en partie inclinées par rapport à l'axe longitudinal (X) de l'aube, le procédé comprenant une étape consistant à réaliser un brut de fonderie destiné à être usiné, **caractérisé en ce que** la léchette aval (121) est formée de fonderie avec une surépaisseur transversale (130) de sorte que cette léchette présente une face amont (134) sensiblement parallèle à l'axe précité, et **en ce que** le procédé comprend une étape supplémentaire consistant à usiner ladite surépaisseur pour que la léchette aval ait une face amont (138) inclinée par rapport à l'axe précité.

2. Procédé selon la revendication 1, **caractérisé en ce que** les léchettes (120, 121) sont réalisées de fonderie au moyen d'un moule (150) qui, après solidification des léchettes, est retirée de l'aube en le déplaçant en translation vers l'extérieur dans une direction sensiblement parallèle à l'axe longitudinal (X) de l'aube.

3. Procédé selon la revendication 1 ou 2, **caractérisé en ce que** l'usinage est réalisé au moyen d'une meule.

4. Procédé selon l'une des revendications précédentes, **caractérisé en ce que** les léchettes (120, 121) ont des angles d'inclinaison différents par rapport à l'axe précité.

5. Procédé selon l'une des revendications précédentes, **caractérisé en ce que** ladite face amont (134) s'étend sur sensiblement toute la dimension axiale de la léchette aval (121).

6. Procédé selon l'une des revendications précédentes, dont le brut de fonderie est réalisé en un matériau anisotrope, notamment à base nickel.

7. Moule (150) pour la réalisation de fonderie des léchettes amont (120) et aval (121) du talon (118) d'une aube de rotor de turbomachine, comprenant une première empreinte (152) de formation de la léchette amont et une seconde empreinte (154) de formation de la léchette aval, les empreintes débouchant sur une face (156) sensiblement plane du moule destinée à définir une face extérieure du talon de l'aube, **caractérisé en ce que** la première empreinte comporte une face aval (158) inclinée par rapport à une normale (160) à ladite face plane, et la seconde empreinte comporte une face amont sensiblement parallèle à cette normale.

8. Brut de fonderie (101) destiné à être usiné pour la réalisation d'une aube de rotor de turbomachine, comprenant une pale reliée à une extrémité à un pied et à son extrémité opposée à un talon (118) portant des léchettes amont (120) et aval (121), la léchette amont étant au moins en partie inclinée par rapport à l'axe longitudinal de l'aube, **caractérisé en ce que** la léchette aval comprend une face amont (134) sensiblement parallèle à l'axe précité et une face aval (136) inclinée par rapport à cet axe.

9. Brut de fonderie selon la revendication 8, **caractérisé en ce que** la léchette amont (120) est inclinée d'un angle d'environ 30° par rapport à l'axe précité, et la face aval (134) de la léchette aval (121) est inclinée d'un angle d'environ 15° par rapport à cet axe.

10. Brut de fonderie selon l'une des revendications 8 et 9 dont lesdites léchettes sont reliées entre elles par un voile de matière (128).

## Patentansprüche

1. Verfahren zum Herstellen einer Rotorschaufel (10) für eine Strömungsmaschine, wobei die Schaufel (12) eine mit einem Ende an einem Fuß (16) und am Ende gegenüber einem Absatz (18) zum Tragen stromaufwärtiger und stromabwärtiger Zungen, die wenigstens teilweise zur Längsachse (X) der Schaufel geneigt sind, verbundene Schaufel umfasst, wobei das Verfahren einen Schritt zum Fertigen eines Gießerei-Rohteils, das bestimmt ist, bearbeitet zu werden, umfasst, **dadurch gekennzeichnet, dass** die stromabwärtige Zunge (121) mit einer Querzugabe (130) im Gießverfahren gebildet wird, so dass diese Zunge eine im Wesentlichen zur Achse parallele stromaufwärtige Seite (134) aufweist, und dass das Verfahren einen zusätzlichen Schritt zum Bearbeiten der Zugabe umfasst, damit die stromabwärtige Zunge eine zur Achse geneigte stromaufwärtige Seite (138) aufweist.

2. Verfahren nach Anspruch 1, **dadurch gekennzeichnet, dass** die Zungen (120, 121) im Gießverfahren mit einer Form (150) gefertigt werden, die nach dem Aushärten der Zungen von der Schaufel durch eine Verschiebebewegung nach außen in einer im Wesentlichen zur Längsachse (X) der Schaufel parallelen Achse entfernt wird.

3. Verfahren nach Anspruch 1 oder 2, **dadurch gekennzeichnet, dass** die Bearbeitung mit einer Schleifscheibe erfolgt.

4. Verfahren nach einem der vorhergehenden Ansprüche, **dadurch gekennzeichnet, dass** die Zungen (120, 121) verschiedene Neigungswinkel zur Achse aufweisen.

5. Verfahren nach einem der vorhergehenden Ansprüche, **dadurch gekennzeichnet, dass** sich die stromaufwärtige Seite (134) im Wesentlichen über das gesamte Axialmaß der stromabwärtigen Zunge (121) erstreckt.

6. Verfahren nach einem der vorhergehenden Ansprüche, wobei das Gießerei-Rohteil aus einem anisotropen Material insbesondere auf Nickelbasis gefertigt wird.

7. Form (150) zum Fertigen der stromaufwärtigen (120) und stromabwärtigen (121) Zungen des Absatzes (118) einer Strömungsmaschinen-Rotorschaufel im Gießverfahren, umfassend einen ersten Formhohlraum (152) zum Bilden der stromaufwärtigen Zunge und einen zweiten Formhohlraum (154) zum Bilden der stromabwärtigen Zunge, wobei die Formhohlräume in einer im Wesentlichen geraden Seite (156) der Form münden, die zum Definieren einer Außenseite des Absatzes der Schaufel bestimmt ist, **dadurch gekennzeichnet, dass** der erste Formhohlraum eine zu einer Senkrechten (160) zur geraden Seite geneigte stromaufwärtige Seite (158) umfasst und der zweite Formhohlraum eine im Wesentlichen zu dieser Senkrechten parallele stromaufwärtige Seite umfasst.

8. Gießerei-Rohteil (101), das dazu bestimmt ist, für die Fertigung einer Strömungsmaschinen-Rotorschaufel bearbeitet zu werden, umfassend ein an einem Ende mit einem Fuß und am Ende gegenüber einem Absatz (118) zum Tragen der stromaufwärtigen (120) und stromabwärtigen (121) Zungen verbundenes Blatt, wobei die stromaufwärtige Zunge wenigstens teilweise zur Längsachse der Schaufel geneigt ist, **dadurch gekennzeichnet, dass** die stromabwärtige Zunge eine im Wesentlichen zur Achse parallele stromaufwärtige Seite (134) und zu dieser Achse geneigte stromabwärtige Seite (136) umfasst.

9. Gießerei-Rohteil nach Anspruch 8, **dadurch gekennzeichnet, dass** die stromaufwärtige Zunge (120) in einem Winkel von etwa 30° zur Achse geneigt ist und die stromabwärtige Seite (134) der stromabwärtigen Zunge (121) in einem Winkel von etwa 15° zu dieser Achse geneigt ist.

10. Gießerei-Rohteil nach einem der Ansprüche 8 und 9, wobei die Zungen durch eine Materialschale (128) miteinander verbunden sind.

## Claims

1. Method for producing a rotor blade (10) for a turbine engine, said blade comprising a vane (12) which is connected at one end to a root (16) and at the opposite end thereof to a heel (18) bearing upstream and downstream knife-edge seals, which are inclined at least in part relative to the longitudinal axis (X) of the blade, the method comprising a step which consists in producing a blank casting which is to be machined, **characterised in that** the downstream knife-edge seal (121) is formed by casting having a transverse machining allowance (130) in such a way that said knife-edge seal has an upstream face (134) which is substantially parallel to the above-mentioned axis, and **in that** the method comprises an additional step which consists in machining said machining allowance so that the downstream knife-edge seal has an upstream face (138) which is inclined relative to the above-mentioned axis.

2. Method according to claim 1, **characterised in that** the knife-edge seals (120, 121) are produced by casting using a mould (150) which, after solidification of the knife-edge seals, is removed from the blade by moving it in translation towards the outside in a direction which is substantially parallel to the longitudinal axis (X) of the blade.

3. Method according to either claim 1 or claim 2, **characterised in that** the machining is carried out using a grinding wheel.

4. Method according to any of the preceding claims, **characterised in that** the knife-edge seals (120, 121) have different angles of inclination relative to the above-mentioned axis.

5. Method according to any of the preceding claims, **characterised in that** said upstream face (134) extends over substantially the entire axial dimension of the downstream knife-edge seal (121).

6. Method according to any of the preceding claims, wherein the blank casting is made of an anisotropic material, in particular a nickel-based material.

7. Mould (150) for carrying out casting of the upstream (120) and downstream (121) knife-edge seals of the heel (118) of a turbine engine rotor blade, comprising a first cavity (152) for forming the upstream knife-edge seal and a second cavity (154) for forming the downstream knife-edge seal, the cavities opening onto a substantially planar face (156) of the mould which is intended to define an outer face of the heel of the blade, **characterised in that** the first cavity comprises a downstream face (158) which is inclined relative to a normal (160) to said planar face, and the second cavity comprises an upstream face which is substantially parallel to said normal.

8. Blank casting (101) which is to be machined to produce a turbine engine rotor blade, comprising a vane which is connected at one end to a root and at the opposite end thereof to a heel (118) bearing upstream (120) and downstream (121) knife-edge seals, the upstream knife-edge seal being inclined at least in part relative to the longitudinal axis of the blade, **characterised in that** the downstream knife-edge seal comprises an upstream face (134) which is substantially parallel to the above-mentioned axis and a downstream face (136) which is inclined relative to said axis.

9. Blank casting according to claim 8, **characterised in that** the upstream knife-edge seal (120) is inclined by an angle of approximately 30° relative to the above-mentioned axis, and the downstream face (134) of the downstream knife-edge seal (121) is inclined by an angle of approximately 15° relative to said axis.

10. Blank casting according to either claim 8 or claim 9, wherein said knife-edge seals are interconnected by a material web (128).
